# EUROPÄISCHE PATENTSCHRIFT

(11) **EP 1 227 209 B1**
(45) Veröffentlichungstag und Bekanntmachung des Hinweises auf die Patenterteilung: **03.12.2008**
(21) Anmeldenummer: 02000768.8
(22) Anmeldetag: 14.01.2002
(51) Int. Cl.: E05F 15/10, F16H 1/12

(54) **Antriebseinrichtung für Tore**
Drive mechanism for gates
Dispositif d'entraînement pour portes

(30) Priorität: 24.01.2001 DE 10103090
(43) Veröffentlichungstag der Anmeldung: 31.07.2002
(73) Patentinhaber: Tornado Antriebstechnik GmbH, D-13507 Berlin (DE)
(72) Erfinder: Mensing, Norbert, 13591 Berlin (DE); Wagenhaus, Kay, 12524 Berlin (DE)
(74) Vertreter: Kratzsch, Volkhard

(56) Entgegenhaltungen:
- US-A- 2 908 187
- US-A- 5 501 117

## Beschreibung

Die Erfindung bezieht sich auf eine Antriebseinrichtung mit den Merkmalen im Oberbegriff des Anspruchs 1.

Es sind Antriebseinrichtungen dieser Art bekannt (US-A-5 501 117), die zum Antrieb von Geräten vorgesehen sind. Eine solche Antriebseinrichtung hat den Vorteil eines kompakten Winkelgetriebes. Sie ist ferner einfach und kostengünstig und erfordert wenig verschiedene bewegliche Getriebeteile (Ritzel, Zahnrad).

Aus US-A-2 908 187 ist ein Winkelgetriebe mit zwei etwa kegelstumpfförmigen Ritzeln bekannt, die auf einer gemeinsamen Antriebswelle angeordnet und gemeinsam von dieser angetrieben werden. Jedem Ritzel ist ein eigenes Zahnrad zugeordnet, mit dem das jeweilige Ritzel in Eingriff steht, wobei jedes Zahnrad mit einer zugeordneten Abtriebswelle verbunden ist. Jedes Zahnrad kann über eine Kupplung mit Schiebemuffe mit der dazu koaxialen Abtriebswelle gekuppelt werden. Für die Kupplung sind beim jeweiligen Zahnrad und der zugeordneten Schiebemuffe axial in Eingriff bringbare bzw. außer Eingriff bringbare Stirnzähne vorgesehen.

Es sind Antriebseinrichtungen für Tore bekannt, bei denen das Getriebe als Schneckengetriebe ausgebildet ist, bei dem die Schnecke vom Antriebsmotor angetrieben ist und getrieblich mit dem abtriebsseitigen Schneckenrad in Verbindung steht. Eine derartige Antriebseinrichtung ist aufgrund dieses Schneckengetriebes nachteilig. Es ergeben sich ungünstige Berührungsverhältnisse und eine ungünstige Schmierfilmdickenverteilung, bei der die Schmierfilmdicke von der Einlaufseite her zunächst bis auf Null abnimmt und dann zur Auslaufseite wieder ansteigt. Aus diesem Grund muss bei einem leistungsfähigen Schneckengetriebe ein Verzahnungspartner aus einem Werkstoff mit guten Notlaufeigenschaften hergestellt werden. Am häufigsten wird hierbei die Kombination Stahl-Bronze gewählt, wobei das aus Bronze gefertigte Rad während des Betriebs einem natürlichen Verschleiß unterliegt. Ein derartiges Schneckengetriebe ist also mit einem entsprechenden größeren Verschleiß behaftet. Seine Tragfähigkeit ist aufgrund der Paarung Stahl-Bronze nicht besonders hoch. Nachteilig ist bei einem solchen Schneckengetriebe nicht nur die verkürzte Lebensdauer, sondern auch der erhöhte Wartungsbedarf, ferner das relativ große Gewicht, die nicht überaus große Tragfähigkeit und das große Bauvolumen.

Der Erfindung liegt die Aufgabe zugrunde, eine Antriebseinrichtung der eingangs genannten Art zu schaffen, bei der die genannten Nachteile beseitigt sind und eine möglichst langlebige, wartungsarme, preiswerte, kompakte und hinsichtlich des Gewichts günstige Einrichtung geschaffen ist.

Die Aufgabe ist bei einer Antriebseinrichtung der eingangs genannten Art gemäß der Erfindung durch die Merkmale im Anspruch 1 gelöst. Weitere besondere Erfindungsmerkmale sowie vorteilhafte Weiterbildungen und Ausgestaltungen sind in den weiteren Ansprüchen enthalten.

Aufgrund der erfindungsgemäßen Gestaltung ist eine Torantriebseinrichtung geschaffen, die verglichen mit einem als Schneckengetriebe gestalteten Getriebe, bei gleichem Drehmoment wesentlich kompakter, leichter, kostengünstiger ist, wobei das Getriebe eine höhere Tragfähigkeit hat und aufgrund günstiger Berührungsverhältnisse nahezu verschleißfrei ist, zumindest verschleißarm ist und somit eine große Lebensdauer hat, ferner wartungsarm und preisgünstig ist. Das Winkelgetriebe hat ferner selbsthemmende Wirkung, so dass eine Bremse oder andere Sperrmittel entbehrlich sind. Die Selbsthemmung ist zudem über einen großen Übersetzungsbereich, wie er für Torantriebe wünschenswert ist, wirksam, der wesentlich größer ist als bei einem Schneckengetriebe.

Weitere besondere Vorteile der Antriebseinrichtung gemäß der Erfindung sind in der nachfolgenden Beschreibung im Einzelnen dargestellt, worauf zur Vermeidung von Wiederholungen verwiesen wird.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht einer Antriebseinrichtung für Tore od. dgl. gemäß einem ersten Ausführungsbeispiel,
- Fig. 2: einen schematischen Schnitt entlang der Linie II -II in Fig. 1,
- Fig. 3: eine Einzelheit entsprechend einem Schnitt entlang der Linie III - III in Fig. 1,
- Fig. 4: eine schematische Seitenansicht in Pfeilrichtung IV in Fig. 1,
- Fig. 5: einen schematischen Schnitt etwa entsprechend demjenigen in Fig. 2 eines zweiten Ausführungsbeispieles der Antriebseinrichtung,
- Fig. 6: eine Einzelheit im Schnitt entlang der Linie VI - VI in Fig. 5.

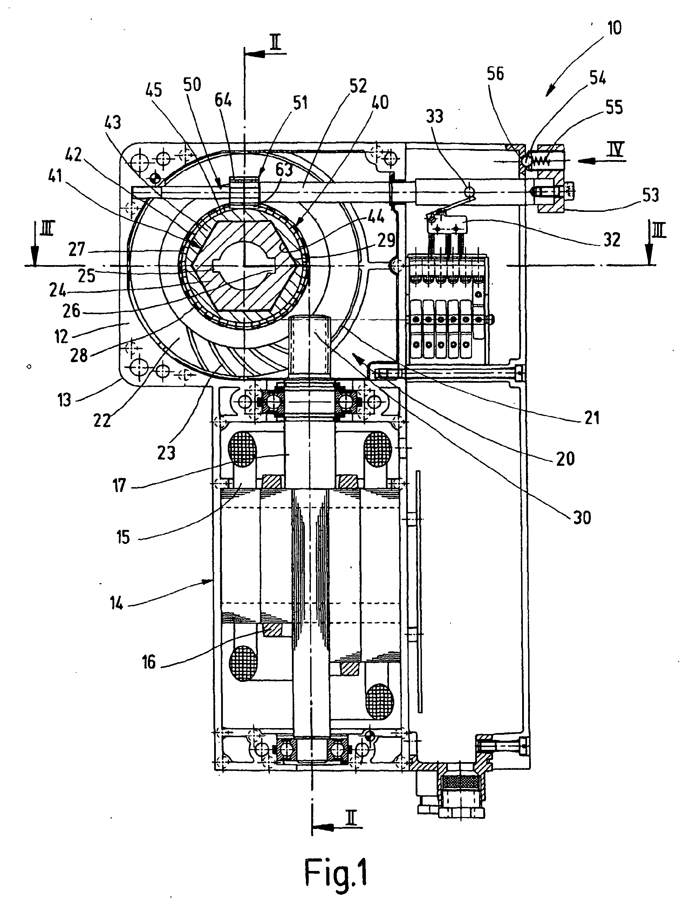

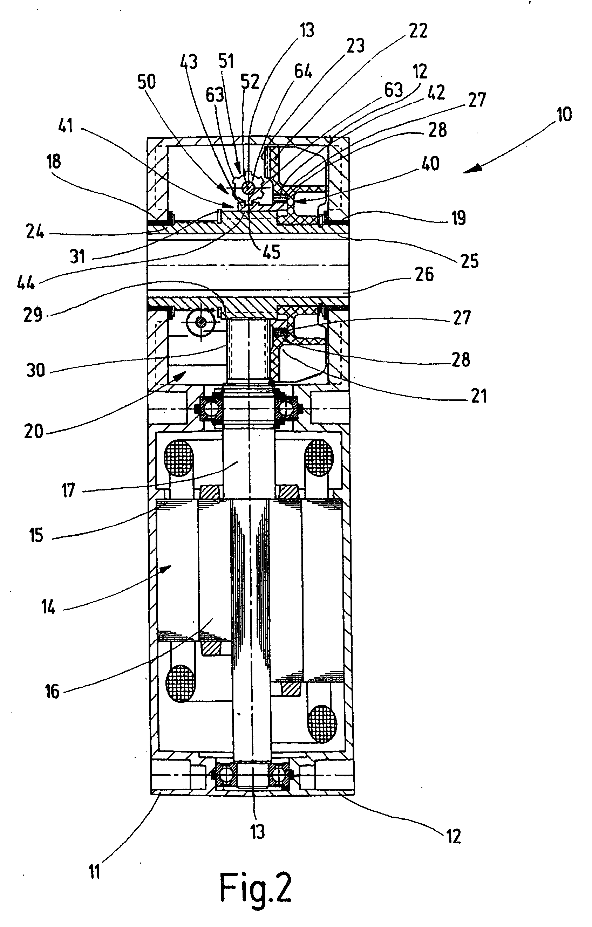

In Fig. 1 bis 4 ist eine Antriebseinrichtung 10 gezeigt, die für Tore, insbesondere Sektionaltore, Rolltore, Rollgitter od. dgl. vorgesehen ist und auch zum Antrieb anders gearteter Verschlussglieder, z.B. von Schiebetoren, Schiebegittem oder ähnlichen, geeignet ist. Die Antriebseinrichtung 10 weist ein aus zwei Teilen 11 und 12 gebildetes, geteiltes Gehäuse 13 auf, in dem ein insbesondere elektrischer Antriebsmotor 14 enthalten ist, der einen Stator 15 und einen Rotor 16 aufweist, der auf einer an beiden Enden gelagerten Welle 17 angeordnet ist. Dem Antriebsmotor 14 ist ein Getriebe 20 nachgeschaltet, das als achsversetztes Winkelgetriebe 21 mit z.B. relativ großem Achsversatz und in Form eines sog. Spiroidgetriebes ausgebildet ist. Dieses Winkelgetriebe 21 weist ein abtriebsseitiges planes Zahnrad 22 auf, das auf einer Stirnseite, und zwar auf der in Fig. 2 linken Stirnseite, mit einer Verzahnung 23 versehen ist. Die Verzahnung 23 ist als sog. Spiroidverzahnung ausgebildet, wie insbesondere aus den nur in Fig. 1 schematisch angedeuteten Zähnen dieser Verzahnung 23 ersichtlich ist. Bestandteil des Winkelgetriebes 21 ist ferner ein zylindrisches Ritzel 30, das auf der die Verzahnung 23 tragenden Seite am Zahnrad 22 angreift und mit dessen Verzahnung 23 in Eingriff steht. Das Ritzel 30 hat ebenfalls eine Verzahnung etwa in Form eines schraubenförmigen Gewindes od. dgl. und ähnelt dabei einer Zylinderschnecke. Die Achsen des Zahnrades 22 und des Ritzels 30 kreuzen sich, wobei der Winkel dazwischen etwa 90° beträgt. Grundsätzlich ist ein derartiges Winkelgetriebe 21, unter der Marke Spiroidgetriebe oder auch Spiroplangetriebe, bekannt (US-PS 42 26 136, EP 617 214 B1). Eine Besonderheit der Antriebseinrichtung 10 liegt darin, dass bei dieser für Tore, insbesondere Sektionaltore, Rolltore, Rollgitter od. dgl. vorgesehenen Antriebseinrichtung ein derartiges zuvor beschriebenes Winkelgetriebe 21 zum Einsatz kommt mit allen vorteilhaften Eigenschaften dieses Winkelgetriebes 21, verglichen z.B. mit einem Schnecken- oder Kegelradgetriebe. Diese Vorteile bestehen z.B. in günstigeren Berührungsverhältnissen bei der Anordnung des Zahnrades 22 und des Ritzels 30. Es ergibt sich ein annähernd konstanter Schmierfilm entlang der Berührungslinie zwischen beiden, was den Vorteil hat, dass für das Zahnrad 22 und das Ritzel 30 die gleiche Werkstoffpaarung verwendet werden kann, wobei beide z.B. aus Stahl bestehen können. In besonders vorteilhafter Gestaltung ist beim gezeigten Ausführungsbeispiel vorgesehen, dass das Zahnrad 22 als Formteil ausgebildet ist. Im Fall kleinerer Drehmomente ist das Zahnrad 22 dabei aus Kunststoff hergestellt, während für größere Momente das Zahnrad 22 aus Kugelgraphitguss gebildet ist. Von Vorteil ist bei diesem Winkelgetriebe 21, dass die Verzahnung bis auf einen minimalen Einlaufverschleiß praktisch dauerfest ist. Das Getriebe hat ferner eine größere Tragfähigkeit als ein Schnecken- oder Kegelradgetriebe und hat aufgrund der höheren Tragfähigkeit den besonderen Vorteil, dass es bei gleicher Leistung wesentlich kompakter baut. Ferner hat das Winkelgetriebe 21 ein günstiges, relativ geringes Gewicht und dabei eine hohe Korrosionsbeständigkeit. Von Vorteil ist ferner die hierbei erreichte geringe Geräuschemission, erzielt durch die große Gesamtüberdeckung, einem überwiegenden Gleiten im Zahneingriff und dem damit verbundenen geringen Zahneingriffsstoß.

Das Ritzel 30 verläuft koaxial zur Welle 17 des Antriebsmotors 14 und ist mit dieser drehfest verbunden. Das Ritzel 30 ist z.B. an einer Hohlwelle ausgebildet, die auf der Welle 17 drehfest angeordnet ist. Statt dessen kann das Ritzel 30 auch mit der Welle 17 einstückig sein.

Das Zahnrad 22 ist mit einer beidendig mittels Gleitbuchsen 18, 19 im Gehäuse 13 gelagerten Abtriebswelle 24 gekoppelt, die hier z.B. als Hohlwelle ausgebildet ist und die der Kraftbetätigung des nicht weiter gezeigten Tores od. dgl. dient. Die hohle Abtriebswelle 24 weist auf ihrer inneren Umfangsfläche zwei vorzugsweise diametral gegenüberliegende Längsnuten 25, 26 auf, von denen die eine zur Aufnahme einer in Zoll bemessenen Passfeder und die andere zur Aufnahme einer in metrischen Abmessungen bemessenen Passfeder ausgebildet ist, so dass die Antriebseinrichtung 10 ohne Umbau für beide Maßeinheiten verwendbar ist.

Die Kopplung des Zahnrades 22 mit der Abtriebswelle 24 ist formschlüssig. Das Winkelgetriebe 21 weist eine Kupplungseinrichtung 40 auf, die zwischen dem Zahnrad 22 und der Abtriebswelle 24 angeordnet und wirksam ist und z.B. von Hand betätigbar ist. Die Kupplungseinrichtung 40 ist als formschlüssige ausgebildet, der eine Betätigungseinrichtung 50 zugeordnet ist, mittels der die Kupplungseinrichtung 40 einrückbar bzw. ausrückbar ist. Das Zahnrad 22 ist auf der Abtriebswelle 24, relativ zu dieser drehbar, angeordnet und von dieser durchsetzt. Aufgrund der besonderen Gestaltung des Getriebes 20 als beschriebenes Winkelgetriebe 21 ergibt sich im Gehäuse 13 auf der die Verzahnung 23 aufweisenden Seite des Zahnrades 22 ein relativ großer freier Raum, der für sonstige Funktionen nutzbar ist. In diesem freien Raum ist z.B. die Kupplungseinrichtung 40 und/oder die Betätigungseinrichtung 50 platziert, die beide auf der gleichen Seite des Zahnrades 22 angeordnet sind, wo auch das Ritzel 30 verläuft.

Die Antriebseinrichtung kann bedarfsweise auch noch mit einer an sich bekannten Absturzsicherung versehen sein. Für die Unterbringung einer solchen Absturzsicherung kann z.B. der vorhandene freie Raum links des Zahnrades 22 genutzt werden, in den diese dann integriert wird.

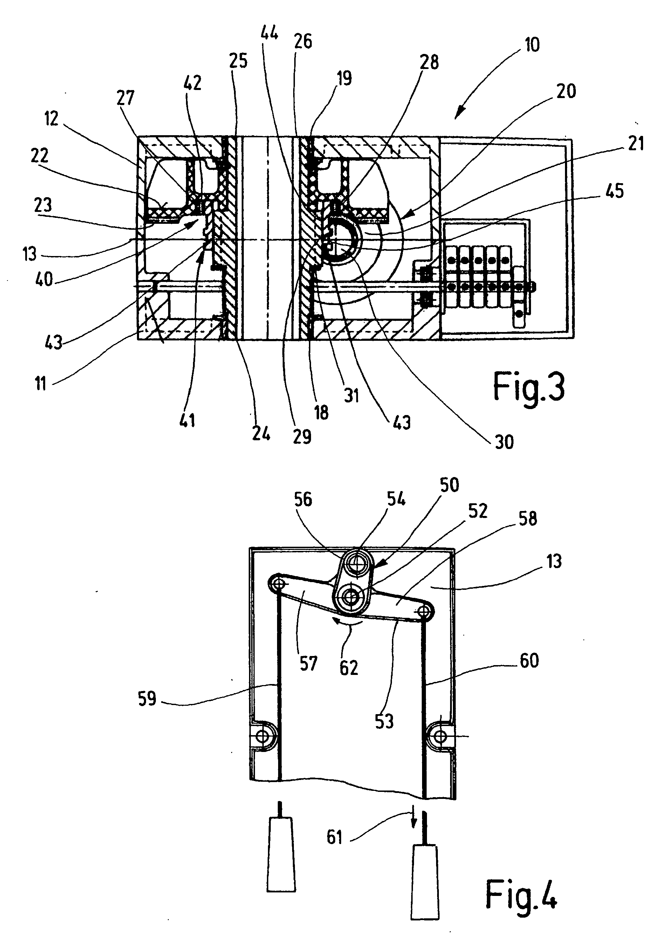

Die Kupplungseinrichtung 40 weist ein Kupplungsglied 41 auf, das auf der Abtriebswelle 24 parallel zu deren Längsachse translatorisch verschiebbar angeordnet und mit der Abtriebswelle 24 drehmomentübertragend, insbesondere formschlüssig, gekuppelt ist. Das Kupplungsglied 41 ist mit dem Zahnrad 22 nach Wahl in Eingriff bringbar, wie dies in Fig. 1 bis 3 gezeigt ist, oder statt dessen außer Eingriff damit bringbar. Um das Kupplungsglied 41, ausgehend von der Position gemäß Fig. 1 bis 3, außer Eingriff mit dem Zahnrad 22 zu bringen, bedarf es einer Verschiebung des Kupplungsgliedes 41 in Fig. 2 nach links bzw. in Fig. 3 nach unten.

Das Zahnrad 22 und das Kupplungsglied 41 weisen miteinander in Eingriff bzw. außer Eingriff bringbare Mitnehmer auf, wobei die Mitnehmer des Zahnrades 22 mit 27 und diejenigen des Kupplungsgliedes 41 mit 42 bezeichnet sind. Diese Mitnehmer 27, 42 sind aus radialen Vorsprüngen gebildet. Beim gezeigten Ausführungsbeispiel sind diese Mitnehmer 27, 42 als Zähne ausgebildet, die durch axiale Relatiwerschiebung miteinander in Eingriff gelangen. So ist das Kupplungsglied 41 auf einem in Fig. 2 rechts befindlichen endseitigen Umfangsteil mit Mitnehmern 42 versehen in Form von Vorsprüngen, insbesondere Zähnen. Das Zahnrad 22 weist auf der dem Kupplungsglied 41 zugewandten Seite ein integriertes, insbesondere damit einstückiges, Hohlrad 28 auf, das die Mitnehmer 27 in Form von radial nach innen vorspringenden Vorsprüngen, insbesondere Zähnen, aufweist. Bei der in Fig. 1 bis 3 gezeigten eingekuppelten Stellung des Kupplungsgliedes 41, bei der dieses in Fig. 2 nach rechts und zum Zahnrad 22 hin verschoben ist, greifen die als Zähne gestalteten Mitnehmer 42 des Kupplungsgliedes 41 ein in die Zahnzwischenräume der als Zähne ausgebildeten Mitnehmer 27 dieses Hohlrades 28 des Zahnrades 22. Aufgrund dieses formschlüssigen Eingriffs wird die Antriebsdrehung des Zahnrades 22 auf das Kupplungsglied 41 übertragen. Da letzteres mit der Abtriebswelle 24 drehmomentübertragend verbunden ist, wird diese Abtriebsdrehung des Zahnrades 22 somit auf die Abtriebswelle 24 übertragen.

Das Kupplungsglied 41 ist als Schiebemuffe 43 ausgebildet, wobei die als Zähne gestalteten Mitnehmer 42 an dem Endteil der Schiebemuffe 43 vorgesehen sind, der dem Zahnrad 22 zugewandt ist. Das Kupplungsglied 41 in Gestalt der Schiebemuffe 43 weist ein Vielkant-Innenprofil 44, z.B. ein Sechskantprofil, auf. In entsprechender Zuordnung weist die Abtriebswelle 24 ein Vielkant-Außenprofil 29, z.B. ein Sechskantprofil, auf, auf dem das Kupplungsglied 41 mit seinem Vielkant-Innenprofil 44 drehmomentübertragend und verschiebbar angeordnet ist, wobei der Verschiebeweg zumindest in Fig. 2 nach links hin in die Ausrückstellung durch entsprechende Anschläge, z.B. einen Sprengring 31, begrenzt wird. Es ist ausreichend, wenn das Vielkant-Außenprofil 29 der Abtriebswelle 24 sich nur über einen mittleren Längenabschnitt der Abtriebswelle 24 erstreckt, wie dies in Fig. 2 und 3 gezeigt ist. Zur Drehmomentübertragung vom Kupplungsglied 41 auf die Abtriebswelle 24 ist statt des Vielkantprofils auch jede andere Gestaltung geeignet, die eine Verschiebung des Kupplungsgliedes 41 zulässt. Die Abtriebswelle 24 kann z.B. zylindrisch sein, ebenso die Bohrung im Kupplungsglied 41, wobei zur Drehmomentübertragung dann z.B. zumindest eine Passfeder zwischen diesen dient.

Die Betätigungseinrichtung 50, mittels der die Kupplungseinrichtung 40 einrückbar bzw. ausrückbar ist, ist über einen Querstift 33 mit einem Sicherheitsschalter 32 gekoppelt, der mittels der Betätigungseinrichtung 50 betätigbar ist, derart, dass bei einer Betätigung der Kupplungseinrichtung 40 mit Überführung in die Ausrückstellung der Sicherheitsschalter 32 eingeschaltet und über diesen die Stromzufuhr zum elektrischen Antriebsmotor 14 unterbrochen wird. Bei ausgerückter Kupplungseinrichtung 40 ist somit der Antriebsmotor 14 ausgeschaltet.

Die Betätigungseinrichtung 50 weist ein formschlüssig an dem Kupplungsglied 41, insbesondere der Schiebemuffe 43, angreifendes Betätigungsglied 51 auf, das die Schiebemuffe 43 einrückt bzw. ausrückt. Dieses Betätigungsglied 51 ist an einer Betätigungswelle 52 drehfest gehalten, die aus dem Gehäuse 13 herausgeführt ist und am herausgeführten Ende ein außerhalb des Gehäuses 13 befindliches Stellglied 53 für die Betätigung trägt. Die Betätigungswelle 52 ist im Gehäuse 13 drehverstellbar gelagert. Sie ist in Bezug auf das Gehäuse 13 in einer Drehstellung, die in Fig. 1 bis 3 gezeigt ist, kraftschlüssig und/oder formschlüssig gesichert, wobei diese gesicherte Drehstellung der dargestellten eingerückten Stellung des Kupplungsgliedes 41 entspricht. Diese Sicherung der Betätigungswelle 52 wird mittels des Stellgliedes 53 erreicht, das ein in Fig. 1 nur schematisch angedeutetes Druckstück 54 z.B. in Form einer Kugel aufweist, das mittels einer Feder 55 federbelastet ist und unter dieser Federwirkung in eine zugeordnete Vertiefung 56 auf dieser Seite des Gehäuses 13 unter Sicherung der Drehstellung der Betätigungswelle 52 gedrückt wird. Das Stellglied 53 kann verschiedenartig gestaltet sein, z.B. als Scheibe oder, wie in Fig. 4 gezeigt ist, als Hebel, der zu beiden Seiten der Längsachse der Betätigungswelle 52 abstrebende Arme 57, 58 aufweist. Am Stellglied 53 greift zumindest ein Schwenkbetätiger 59 bzw. 60 an, wie in Fig. 4 schematisch dargestellt ist. In Fig. 4 ist abweichend von Fig. 1 bis 3 eine solche Drehstellung der Betätigungswelle 52 mit Stellglied 53 gezeigt, in der durch Zug am Schwenkbetätiger 60 in Richtung des Pfeiles 61 eine Schwenkbetätigung des Stellgliedes 53 und damit der Betätigungswelle 52 im Uhrzeigersinn gemäß Pfeil 62 erfolgt ist. Dabei ist das Druckstück 54, z.B. die Kugel, gegen die Wirkung der Feder 55 verschoben und aus der Vertiefung 56 herausbewegt worden. Die Betätigungswelle 52 ist dabei, betrachtet in Fig. 2, im Uhrzeigersinn gedreht worden zusammen mit dem Betätigungsglied 51, wobei diese Drehung eine Verschiebung der Schiebemuffe 43 in Fig. 2 nach links hin zur Folge hat bis hin beispielsweise zum Sprengring 31 als Anschlag und bis die Mitnehmer 42 der Schiebemuffe 43 außer Eingriff mit den Mitnehmern 27 des Zahnrades 22 gelangt sind. Soll das Kupplungsglied 41, ausgehend von der entkuppelten Position gemäß Fig. 4, wieder in die Kuppelstellung eingerückt werden, so wird statt dessen der Schwenkbetätiger 59 durch Zug nach unten betätigt und dadurch das Stellglied 53 mit Betätigungswelle 52 entgegen dem Pfeil 62 in eine Position geschwenkt, in der die beiden Arme 57, 58 z.B. etwa horizontal verlaufen, wobei in dieser Stellung das Druckstück 54 mittels der Feder 55 in die gehäuseseitige Vertiefung 56 hineingedrückt wird und diese gekuppelte Stellung auf diese Weise gesichert wird.

Der am Arm 57 angreifende Schwenkbetätiger 59 und der am Arm 58 angreifende Schwenkbetätiger 60 besteht z.B. aus einer Kette, einem Seil oder aus einem anders gearteten Zugglied.

Das im Inneren des Gehäuses 13 befindliche Betätigungsglied 51 weist mindestens einen Vorsprung 63 auf, der am Kupplungsglied 41 formschlüssig zu dessen Verschiebung angreifen kann. Dieser mindestens eine Vorsprung 63 greift in mindestens eine Ringnut 45 des Kupplungsgliedes 41 ein. Beim ersten Ausführungsbeispiel steht dieser mindestens eine Vorsprung 63 quer, z.B. etwa radial, von der Betätigungswelle 52 in Richtung zur Ringnut 45 ab. Dabei ist die Anordnung so getroffen, dass das Betätigungsglied 51 mehrere gleichartige, abstehende Vorsprünge 63 aufweist. Dies ist dadurch erreicht, dass das Betätigungsglied 51 als Vielkeilstück 64, Zahnrad od. dgl. ausgebildet ist, das auf der Betätigungswelle 52 drehfest angeordnet ist. Mittels dieses Vielkeilstückes 64 wird somit eine Schwenkbewegung der Betätigungswelle 52 in der einen Richtung bzw. in der anderen Richtung formschlüssig auf das Kupplungsglied 41 übertragen und somit die Kupplungseinrichtung 40 eingerückt bzw. gegensinnig ausgerückt.

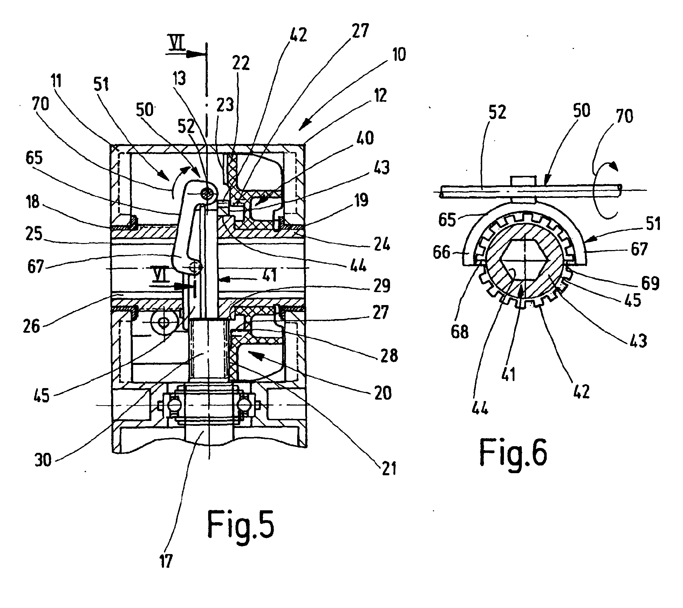

Bei dem in Fig. 5 und 6 gezeigten zweiten Ausführungsbeispiel sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles Bezug genommen ist.

Das zweite Ausführungsbeispiel in Fig. 5 und 6 unterscheidet sich vom ersten Ausführungsbeispiel dadurch, dass das Betätigungsglied 51 eine Gabel 65 aufweist, die das Kupplungsglied 41, insbesondere die Schiebmuffe 43, zumindest auf einem Umfangswinkelabschnitt z.B. von etwa 180° umgreift. Diese Gabel 65 ist in Fig. 5 und 6 nur schematisch dargestellt. Sie weist zwei Gabelschenkel 66, 67 auf, die endseitig formschlüssig mit dem Kupplungsglied 41 gekoppelt sind. Am Ende des jeweiligen Gabelschenkels 66, 67 sitzt ein Eingreifteil 68 bzw. 69, z.B. ein Stift, der in die Ringnut 45 des Kupplungsgliedes 41 eingreift.

In Fig. 5 und 6 ist die Kupplungseinrichtung 40 im ausgerückten Zustand gezeigt, der durch Schwenkbetätigung der Betätigungswelle 52 in Richtung des Pfeiles 70 herbeigeführt worden ist. Soll die Kupplungseinrichtung 40 eingerückt werden, damit die Mitnehmer 42 in formschlüssigen Eingriff mit den Mitnehmern 27 gelangen, so ist hierzu die Betätigungswelle 52 gegensinnig zum Pfeil 70 zu schwenken, so dass über das Betätigungsglied 51 in Form der Gabel 65 das Kupplungsglied 41 in Fig. 5 nach rechts in die Eingriffstellung verschoben wird.

## Patentansprüche

1. Antriebseinrichtung mit einem insbesondere elektrischen Antriebsmotor (14) und einem nachgeschalteten Getriebe (20), das als achsversetztes Winkelgetriebe (21) in Form eines sog. Spiroidgetriebes ausgebildet ist, das ein abtriebsseitiges, auf einer Stirnseite mit einer Verzahnung (23) versehenes planes Zahnrad (22), das mit einer der Kraftbetätigung dienenden Abtriebswelle (24) gekoppelt ist, und ein an dem Zahnrad (22) angreifendes zylindrisches Ritzel (30) aufweist, das koaxial zu einer Welle (17) des Antriebsmotors (14) verläuft und mit dieser drehfest verbunden ist, wobei die Verzahnung dieses Getriebes (20) als sog. Spiroidverzahnung ausgebildet ist,
**gekennzeichnet durch**
die Ausbildung als Torantriebseinrichtung, insbesondere für Sektionaltore, Rolltore, Rollgitter od. dgl., und **dadurch**, dass das Winkelgetriebe (21) eine Kupplungseinrichtung (40) aufweist, die zwischen dem Zahnrad (22) und der Abtriebswelle (24) angeordnet und wirksam ist, dass die Kupplungseinrichtung (40) ein Kupplungsglied (41) aufweist, das auf der Abtriebswelle (24) verschiebbar angeordnet und mit dieser drehmomentübertragend gekuppelt ist und mit dem Zahnrad (22) nach Wahl in Eingriff bzw. außer Eingriff damit bringbar ist, und dass das Kupplungsglied (41) auf einem Umfangsteil Mitnehmer (42) bildende radiale Vorsprünge, insbesondere Zähne, aufweist und dass das Zahnrad (22) auf der dem Kupplungsglied (41) zugewandten Seite ein integriertes, insbesondere damit einstückiges, Hohlrad (28) mit Mitnehmer (27) bildenden radialen Vorsprüngen, insbesondere Zähnen, aufweist, die in der eingekuppelten Stellung des Kupplungsgliedes (41) mit den Mitnehmern (42) dieses formschlüssig in Eingriff stehen.

2. Antriebseinrichtung nach Anspruch 1,
**dadurch gekennzeichnet,**
**dass** das Ritzel (30) an einer Hohlwelle ausgebildet ist, die auf der Welle (17) des Antriebsmotors (14) drehfest angeordnet ist, oder mit der Welle (17) des Antriebsmotors (14) einstückig ist.

3. Antriebseinrichtung nach Anspruch 1,
**dadurch gekennzeichnet,**
**dass** die Kopplung des Zahnrades (22) mit der Abtriebswelle (24) formschlüssig ist.

4. Antriebseinrichtung nach Anspruch 1,
**dadurch gekennzeichnet,**
**dass** die Kupplungseinrichtung (40) von Hand betätigbar ist.

5. Antriebseinrichtung nach einem der Ansprüche 1 bis 4,
**dadurch gekennzeichnet,**
**dass** der Kupplungseinrichtung (40) eine Betätigungseinrichtung (50) zugeordnet ist, mittels der die Kupplungseinrichtung (40) einrückbar bzw. ausrückbar ist.

6. Antriebseinrichtung nach Anspruch 5,
**dadurch gekennzeichnet,**
**dass** die Kupplungseinrichtung (40) und/oder die Betätigungseinrichtung (50) auf der gleichen Seite des Zahnrades (22) wie das Ritzel (30) angeordnet sind.

7. Antriebseinrichtung nach einem der Ansprüche 1 bis 6,
**dadurch gekennzeichnet,**
**dass** das Zahnrad (22) auf der Abtriebswelle (24), relativ zu dieser drehbar, angeordnet und von dieser durchsetzt ist.

8. Antriebseinrichtung nach einem der Ansprüche 1 bis 7,
**dadurch gekennzeichnet,**
**dass** das Kupplungsglied (41) als Schiebemuffe (43) ausgebildet ist.

9. Antriebseinrichtung nach Anspruch 8,
**dadurch gekennzeichnet,**
**dass** die Mitnehmer (42), insbesondere Zähne, an dem einen Endteil der Schiebemuffe (43) angeordnet sind, der dem Zahnrad (22) zugewandt ist.

10. Antriebseinrichtung nach einem der Ansprüche 1 bis 9,
**dadurch gekennzeichnet,**
**dass** das Kupplungsglied (41), insbesondere die Schiebemuffe (43), ein Vielkant-Innenprofil (44) und die Abtriebswelle (24) ein Vielkant-Außenprofil (29) aufweisen, auf dem das Kupplungsglied (41) drehmomentübertragend und verschiebbar angeordnet ist.

11. Antriebseinrichtung nach einem der Ansprüche 5 bis 10,
**dadurch gekennzeichnet,**
**dass** der Betätigungseinrichtung (50) ein die Stromzufuhr zum insbesondere elektrischen Antriebsmotor (14) in der entkuppelten Stellung des Kupplungsgliedes (41) unterbrechender Sicherheitsschalter (32) zugeordnet ist, der mittels der Betätigungseinrichtung (50) betätigbar ist.

12. Antriebseinrichtung nach einem der Ansprüche 5 bis 11,
**dadurch gekennzeichnet,**
**dass** die Betätigungseinrichtung (50) ein formschlüssig an dem Kupplungsglied, (41) angreifendes und dieses einrückendes bzw. ausrückendes Betätigungsglied (51) aufweist.

13. Antriebseinrichtung nach Anspruch 12,
**dadurch gekennzeichnet,**
**dass** das Betätigungsglied (51) an einer Betätigungswelle (52) gehalten ist, die aus dem Gehäuse (13) herausgeführt ist und ein außerhalb des Gehäuses (13) befindliches Stellglied (53) zur Betätigung der Kupplungseinrichtung (40) trägt.

14. Antriebseinrichtung nach Anspruch 13,
**dadurch gekennzeichnet,**
**dass** die Betätigungswelle (52), insbesondere das Stellglied (53), in Bezug auf das Gehäuse (13) in einer Drehstellung kraftschlüssig und/oder formschlüssig gesichert ist, die der eingerückten Stellung des Kupplungsgliedes (41) entspricht.

15. Antriebseinrichtung nach Anspruch 14,
**dadurch gekennzeichnet,**
**dass** das Stellglied (53) ein federbelastetes (Feder 55) Druckstück (54), z.B. eine Kugel, aufweist, die in einer zugeordneten Vertiefung (56) des Gehäuses (13) unter Sicherung der Drehstellung der Betätigungswelle (52) aufnehmbar ist.

16. Antriebseinrichtung nach Anspruch 14 oder 15,
**dadurch gekennzeichnet,**
**dass** am Stellglied (53) zumindest ein Schwenkbetätiger (59, 60) zum Schwenken in einer Richtung und Ausrücken des Kupplungsgliedes (41) bzw. zum Schwenken in entgegengesetzter Richtung und Einrücken des Kupplungsgliedes (41) angreift.

17. Antriebseinrichtung nach Anspruch 16,
**dadurch gekennzeichnet,**
**dass** der mindestens eine Schwenkbetätiger (59, 60) aus einer Kette, einem Seil oder dergleichen Zugglied gebildet ist.

18. Antriebseinrichtung nach einem der Ansprüche 12 bis 17,
**dadurch gekennzeichnet,**
**dass** das Betätigungsglied (51) mindestens einen Vorsprung (63) aufweist, der am Kupplungsglied (41) formschlüssig zu dessen Verschiebung angreifen kann.

19. Antriebseinrichtung nach Anspruch 18,
**dadurch gekennzeichnet,**
**dass** der mindestens eine Vorsprung (63) in zumindest eine Ringnut (45) des Kupplungsgliedes (41) eingreift.

20. Antriebseinrichtung nach Anspruch 18 oder 19,
**dadurch gekennzeichnet,**
**dass** der mindestens eine Vorsprung (63) von der Betätigungswelle (52) quer, z.B. etwa radial, absteht.

21. Antriebseinrichtung nach einem der Ansprüche 12 bis 20,
**dadurch gekennzeichnet,**
**dass** das Betätigungsglied (51) als mehrere abstehende Vorsprünge (63) aufweisendes Vielkeilstück (64), Zahnrad oder dergleichen ausgebildet ist, auf der Betätigungswelle (52) drehfest angeordnet ist.

22. Antriebseinrichtung nach einem der Ansprüche 12 bis 20,
**dadurch gekennzeichnet,**
**dass** das Betätigungsglied (51) eine Gabel (65) aufweist, die das Kupplungsglied (41) umgreift und deren beide Gabelschenkel (66, 67) endseitig formschlüssig mit dem Kupplungsglied (41) gekoppelt sind.

23. Antriebseinrichtung nach Anspruch 22,
**dadurch gekennzeichnet,**
**dass** am Ende jedes Gabelschenkels (66, 67) ein Eingreifteil (68, 69), z.B. ein Stift, vorgesehen ist, der in eine Ringnut (45) des Kupplungsgliedes (41) eingreift.

24. Antriebseinrichtung nach einem der Ansprüche 1 bis 23,
**dadurch gekennzeichnet,**
**dass** die Abtriebswelle (24) als Hohlwelle ausgebildet ist.

25. Antriebseinrichtung nach Anspruch 24,
**dadurch gekennzeichnet,**
**dass** die Hohlwelle auf der inneren Umfangsfläche zwei vorzugsweise diametral gegenüberliegende unterschiedliche Längsnuten (25, 26), aufweist, von denen eine zur Aufnahme einer in Zoll bemessenen Passfeder und die andere zur Aufnahme einer in metrischen Abmessungen bemessenen Passfeder ausgebildet ist.

26. Antriebseinrichtung nach einem der Ansprüche 1 bis 25,
**dadurch gekennzeichnet,**
**dass** das Zahnrad (22) und das Ritzel (30) aus gleichem Werkstoff, z.B. Stahl, gebildet sind.

27. Antriebseinrichtung nach einem der Ansprüche 1 bis 25,
**dadurch gekennzeichnet,**
**dass** das Zahnrad (22) als Formteil, z.B. aus Kunststoff oder aus Kugelgraphitguss od. dgl., ausgebildet ist.

## Claims

1. Drive apparatus with an, in particular, electric drive motor (14) and with a following gear (20) which is designed as an axially offset angular gear (21) in the form of what is known as a spiroidal gear which has an output-side contrate gearwheel (22), which is provided with a toothing (23) on one end face and which is coupled to an output shaft (24) serving for force actuation, the said spiroidal gear having a cylindrical pinion (30) which engages on the gearwheel (22) and which runs coaxially with respect to a shaft (17) of the drive motor (14) and is connected fixedly to the rotation to the said shaft, the toothing of this gear (20) being designed as what is known as a spiroidal toothing, **characterized by** the design as a door drive apparatus, in particular for sectional doors, roll-up doors, roll-up trellises or the like, and in that the angular gear (21) has a coupling device (40) which is arranged and active between the gearwheel (22) and the output shaft (24), in that the coupling device (40) has a coupling member (41) which is arranged displaceably on the output shaft (24) and is coupled to the latter in a torque-transmitting manner and which can selectively be brought into engagement and out of engagement with the gearwheel (22), and in that the coupling member (41) has, on a circumferential part, radial projections, in particular teeth, which form drivers (42), and in that the gearwheel (22) has, on the side facing the coupling member (41), a ring wheel (28) integrated, in particular in one piece with the said gearwheel, and having radial projections, in particular teeth, which form drivers (27) and which, in the coupled position of the coupling member (41), are in positive engagement with the drivers (42) of the latter.

2. Drive apparatus according to Claim 1, **characterized in that** the pinion (30) is formed on a hollow shaft which is arranged fixedly to the rotation on the shaft (17) of the drive motor (14) or which is in one piece with the shaft (17) of the drive motor (14).

3. Drive apparatus according to Claim 1, **characterized in that** the coupling of the gearwheel (22) to the output shaft (24) is positive.

4. Drive apparatus according to Claim 1, **characterized in that** the coupling device (40) can be actuated by hand.

5. Drive apparatus according to one of Claims 1 to 4, **characterized in that** the coupling device (40) is assigned an actuating device (50) by means of which the coupling device (40) is engageable or disengageable.

6. Drive apparatus according to Claim 5, **characterized in that** the coupling device (40) and/or the actuating device (50) are/is arranged on the same side of the gearwheel (22) as the pinion (30).

7. Drive apparatus according to one of Claims 1 to 6, **characterized in that** the gearwheel (22) is arranged on the output shaft (24) rotatably in relation to this and has the latter passing through it.

8. Drive apparatus according to one of Claims 1 to 7, **characterized in that** the coupling member (41) is designed as a sliding sleeve (43).

9. Drive apparatus according to Claim 8, **characterized in that** the drivers (42), in particular teeth, are arranged on that end part of the sliding sleeve (43) which faces the gearwheel (22).

10. Drive apparatus according to one of Claims 1 to 9, **characterized in that** the coupling member (41) in particular the sliding sleeve (43), has a polygonal inner profile (44) and the output shaft (24) has a polygonal outer profile (29) on which the coupling member (41) is arranged displaceably and in a torque-transmitting manner.

11. Drive apparatus according to one of Claims 5 to 10, **characterized in that** the actuating device (50) is assigned a safety switch (32) which interrupts the supply of current to the, in particular, electric drive motor (14) in the uncoupled position of the coupling member (41) and which can be actuated by means of the actuating device (50).

12. Drive apparatus according to one of Claims 5 to 11, **characterized in that** the actuating device (50) has an actuating member (51) engaging positively on the coupling member (41) and engaging or disengaging the latter.

13. Drive apparatus according to Claim 12, **characterized in that** the actuating member (51) is held on an actuating shaft (52) which is led out of the housing (13) and carries an actuating member (53), located outside the housing (13), for actuating the coupling device (40).

14. Drive apparatus according to Claim 13, **characterized in that** the actuating shaft (52), in particular the actuating member (53), is secured with respect to the housing (13) non-positively and/or positively in a rotary position which corresponds to the engaged position of the coupling member (41).

15. Drive apparatus according to Claim 14, **characterized in that** the actuating member (53) has a spring-loaded (spring 55) thrust piece (54), for example a ball, which can be received in an assigned depression (56) of the housing (13), while at the same time securing the rotary position of the actuating shaft (52).

16. Drive apparatus according to Claim 14 or 15, **characterized in that** at least one pivoting actuator (59, 60) engages on the actuating member (53) for pivoting in one direction and disengaging the coupling member (41) and for pivoting in the opposite direction and engaging the coupling member (41).

17. Drive apparatus according to Claim 16, **characterized in that** the at least one pivoting actuator (59, 60) is formed from a chain, a rope or suchlike pull member.

18. Drive apparatus according to one of Claims 12 to 17, **characterized in that** the actuating member (51) has at least one projection (63) which can engage positively on the coupling member (41) for the displacement of the latter.

19. Drive apparatus according to Claim 18, **characterized in that** the at least one projection (63) engages into at least one annular groove (45) of the coupling member (41).

20. Drive apparatus according to Claim 18 or 19, **characterized in that** the at least one projection (63) projects from the actuating shaft (52) transversely, for example approximately radially.

21. Drive apparatus according to one of Claims 12 to 20, **characterized in that** the actuating member (51) is designed as a splined piece (64), gearwheel or the like, having a plurality of projecting projections (63) and is arranged fixedly to the rotation on the actuating shaft (52).

22. Drive apparatus according to one of Claims 12 to 20, **characterized in that** the actuating member (51) has a fork (65) which engages around the coupling member (41) and the two fork legs (66, 67) of which are positively coupled on the end face to the coupling member (41).

23. Drive apparatus according to Claim 22, **characterized in that**, at the end of each fork leg (66, 67), an engagement part (68, 69), for example a pin, is provided, which engages into an annular groove (45) of the coupling member (41).

24. Drive apparatus according to one of Claims 1 to 23, **characterized in that** the output shaft (24) is designed as a hollow shaft.

25. Drive apparatus according to Claim 24, **characterized in that** the hollow shaft has on the inner circumferential surface two different longitudinal grooves (25, 26) which preferably lie diametrically opposite one another and of which one is designed for receiving an adjusting spring dimensioned in inches and the other is designed for receiving an adjusting spring dimensioned in metric dimensions.

26. Drive apparatus according to one of Claims 1 to 25, **characterized in that** the gearwheel (22) and the pinion (30) are formed from the same material, for example steel.

27. Drive apparatus according to one of Claims 1 to 25, **characterized in that** the gearwheel (22) is produced as a moulding, for example from plastic or from spheroidal graphite iron or the like.

## Revendications

1. Dispositif d'entraînement comportant un moteur d'entraînement en particulier électrique (14) et un engrenage placé en aval (20) qui est conçu en tant qu'engrenage conique décalé axialement (21) sous la forme d'un engrenage dit spiro-conique qui présente une roue dentée plane (22) côté sortie pourvue d'une denture (23) sur une extrémité frontale et couplée avec un arbre de sortie (24) servant à l'actionnement par source d'énergie extérieure, et un pignon cylindrique (30) agissant sur la roue dentée (22), ledit pignon cylindrique évoluant coaxialement par rapport à un arbre (17) du moteur d'entraînement (14) et étant lié en rotation avec ledit arbre, dans lequel la denture de cet engrenage (20) est conçue sous forme de denture dite spiro-conique, **caractérisé par** la conception sous forme de dispositif d'entraînement pour porte, en particulier pour portes sectionnelles, portes à enroulement, grilles à enroulement ou semblables, et en ce que l'engrenage conique (21) présente un dispositif d'accouplement (40) qui est agencé entre la roue dentée (22) et l'arbre de sortie (24) et est actif, en ce que le dispositif d'accouplement (40) présente un élément d'accouplement (41) qui est agencé mobile sur l'arbre de sortie (24) et est couplé avec ce dernier de manière à transmettre le couple et peut y être au choix mis en prise ou hors prise avec la roue dentée (22), et en ce que l'élément d'accouplement (41) présente des saillies radiales, en particulier des dents, formant des dispositifs d'entraînement (42) sur une partie du pourtour et en ce que la roue dentée (22) présente sur le côté tourné vers l'élément d'accouplement (41) une couronne à denture intérieure intégrée (28), en particulier réalisée d'un seul tenant avec elle, comportant des saillies radiales, en particulier des dents, formant des dispositifs d'entraînement (27) qui, dans la position accouplée de l'élément d'accouplement (41), sont en prise par complémentarité de forme avec les dispositifs d'entraînement (42) de ce dernier.

2. Dispositif d'entraînement selon la revendication 1, **caractérisé en ce que** le pignon (30) est conçu au niveau d'un arbre creux qui est agencé de façon liée en rotation sur l'arbre (17) du moteur d'entraînement (14) ou est réalisé d'un seul tenant avec l'arbre (17) du moteur d'entraînement (14).

3. Dispositif d'entraînement selon la revendication 1, **caractérisé en ce que** le couplage de la roue dentée (22) avec l'arbre de sortie (24) se fait par complémentarité de forme.

4. Dispositif d'entraînement selon la revendication 1, **caractérisé en ce que** le dispositif d'accouplement (40) est actionnable manuellement.

5. Dispositif d'entraînement selon l'une quelconque des revendications 1 à 4, **caractérisé en ce qu'**un dispositif d'actionnement (50) est associé au dispositif d'accouplement (40), ledit dispositif d'accouplement (40) étant embrayable ou débrayable au moyen dudit dispositif d'actionnement.

6. Dispositif d'entraînement selon la revendication 5, **caractérisé en ce que** le dispositif d'accouplement (40) et/ou le dispositif d'actionnement (50) sont agencés sur le même côté de la roue dentée (22) que le pignon (30).

7. Dispositif d'entraînement selon l'une quelconque des revendications 1 à 6, **caractérisé en ce que** la roue dentée (22) est agencée sur l'arbre de sortie (24), de manière pivotante par rapport à celui-ci, et est traversée par ce dernier.

8. Dispositif d'entraînement selon l'une quelconque des revendications 1 à 7, **caractérisé en ce que** l'élément d'accouplement (41) est conçu sous forme de manchon baladeur (43).

9. Dispositif d'entraînement selon la revendication 8, **caractérisé en ce que** les dispositifs d'entraînement (42), en particulier des dents, sont agencés au niveau d'une partie terminale du manchon baladeur (43) qui est tournée vers la roue dentée (22).

10. Dispositif d'entraînement selon l'une quelconque des revendications 1 à 9, **caractérisé en ce que** l'élément d'accouplement (41), en particulier le manchon baladeur (43), présente un profil intérieur polyédrique (44) et l'arbre de sortie (24) présente un profil extérieur polyédrique (29) sur lequel l'élément d'accouplement (41) est agencé de façon mobile, pour transmettre le couple.

11. Dispositif d'entraînement selon l'une quelconque des revendications 5 à 10, **caractérisé en ce qu'**un commutateur de sécurité (32) interrompant l'alimentation de courant vers le moteur d'entraînement (14) en particulier électrique dans la position découplée de l'élément d'accouplement (41) est associé au dispositif d'actionnement (50), ledit commutateur de sécurité étant actionnable au moyen du dispositif d'actionnement (50).

12. Dispositif d'entraînement selon l'une quelconque des revendications 5 à 11, **caractérisé en ce que** le dispositif d'actionnement (50) présente un élément d'actionnement (51) qui agit par complémentarité de forme sur l'élément d'accouplement (41) et qui embraye ou désembraye ce dernier.

13. Dispositif d'entraînement selon la revendication 12, **caractérisé en ce que** l'élément d'actionnement (51) est maintenu au niveau d'un arbre de commande (52) qui ressort du boîtier (13) et qui supporte un organe de commande (53) se trouvant à l'extérieur du boîtier (13) en vue de l'actionnement du dispositif d'accouplement (40).

14. Dispositif d'entraînement selon la revendication 13, **caractérisé en ce que** l'arbre de commande (52), en particulier l'organe de commande (53), est assuré par complémentarité de force et/ou par complémentarité de forme par rapport au boîtier (13) dans une position de rotation qui correspond à la position embrayée de l'élément d'accouplement (41).

15. Dispositif d'entraînement selon la revendication 14, **caractérisé en ce que** l'organe de commande (53) présente une pièce recevant la pression (54) sollicitée par ressort (ressort 55), par exemple une bille, qui peut être logée dans un renfoncement associé (56) du boîtier (13) en assurant la position de rotation de l'arbre de commande (52).

16. Dispositif d'entraînement selon la revendication 14 ou 15, **caractérisé en ce que** pour le moins un actionneur pivotant (59, 60) destiné au pivotement dans une direction et au débrayage de l'élément d'accouplement (41) ou destiné au pivotement dans une direction opposée et à l'embrayage de l'élément d'accouplement (41) agit sur l'organe de commande (53).

17. Dispositif d'entraînement selon la revendication 16, **caractérisé en ce que** ledit au moins un actionneur pivotant (59, 60) est constitué d'une chaîne, d'un câble ou d'un organe de traction similaire.

18. Dispositif d'entraînement selon l'une quelconque des revendications 12 à 17, **caractérisé en ce que** l'élément d'actionnement (51) présente au moins une saillie (63) qui peut agir par complémentarité de forme sur l'élément d'accouplement (41) en vue de son déplacement.

19. Dispositif d'entraînement selon la revendication 18, **caractérisé en ce que** ladite au moins une saillie (63) s'engrène dans pour le moins une gorge annulaire (45) de l'élément d'accouplement (41).

20. Dispositif d'entraînement selon la revendication 18 ou 19, **caractérisé en ce que** ladite au moins une saillie (63) dépasse transversalement, par exemple à peu près radialement, de l'arbre de commande (52).

21. Dispositif d'entraînement selon l'une quelconque des revendications 12 à 20, **caractérisé en ce que** l'élément d'actionnement (51) est conçu sous forme d'une pièce cannelée à cales multiples (64) présentant plusieurs saillies proéminentes (63), sous forme d'une roue dentée ou similaire, sur laquelle l'arbre de commande (52) est agencé de façon liée en rotation.

22. Dispositif d'entraînement selon l'une quelconque des revendications 12 à 20, **caractérisé en ce que** l'élément d'actionnement (51) présente une fourche (65) qui entoure l'élément d'accouplement (41) et dont les deux branches de fourche (66, 67) sont accouplées côté extrémité par complémentarité de forme avec l'élément d'accouplement (41).

23. Dispositif d'entraînement selon la revendication 22, **caractérisé en ce qu'**une pièce d'engrènement (68, 69), par exemple un ergot, est prévue à l'extrémité de chaque branche de fourche (66, 67), ladite pièce d'engrènement s'engrenant dans une gorge annulaire (45) de l'élément d'accouplement (41).

24. Dispositif d'entraînement selon l'une quelconque des revendications 1 à 23, **caractérisé en ce que** l'arbre de sortie (24) est conçu sous la forme d'un arbre creux.

25. Dispositif d'entraînement selon la revendication 24, **caractérisé en ce que** l'arbre creux présente sur la surface périphérique intérieure deux gorges longitudinales distinctes (25, 26) de préférence diamétralement opposées, dont l'une est conçue en vue du logement d'un ressort d'ajustage dimensionné en pouce et l'autre en vue du logement d'un ressort d'ajustage dimensionné en mesures métriques.

26. Dispositif d'entraînement selon l'une quelconque des revendications 1 à 25, **caractérisé en ce que** la roue dentée (22) et le pignon (30) sont constitués à partir du même matériau, par exemple de l'acier.

27. Dispositif d'entraînement selon l'une quelconque des revendications 1 à 25, **caractérisé en ce que** la roue dentée (22) est conçue sous forme d'une pièce moulée, par exemple constituée de matière plastique ou de fonte à graphite sphéroïdal ou similaire.
